Europäisches Patentamt

European Patent Office

Office européen des brevets

(11) Numéro de publication: **0 453 383 B1**

## FASCICULE DE BREVET EUROPEEN

(45) Date de publication de fascicule du brevet: **05.07.95** (51) Int. Cl.⁶: **F16H 13/06**

(21) Numéro de dépôt: **91440030.4**

(22) Date de dépôt: **17.04.91**

(54) **Réducteur de vitesse à roues de friction pour machines tournant à régime de rotation élevé, du type à double train épicycloidal.**

(30) Priorité: **17.04.90 FR 9005094**

(43) Date de publication de la demande:
**23.10.91 Bulletin 91/43**

(45) Mention de la délivrance du brevet:
**05.07.95 Bulletin 95/27**

(84) Etats contractants désignés:
**AT BE CH DE DK ES FR GB GR IT LI LU NL SE**

(56) Documents cités:
**EP-A- 0 161 194**
**FR-A- 1 451 418**

(73) Titulaire: **Bech, Jean André**
**391 rue d'Endoume**
**F-13007 Marseille (FR)**

(72) Inventeur: **Bech, Jean André**
**391 rue d'Endoume**
**F-13007 Marseille (FR)**

(74) Mandataire: **Mayran, Ninon, Avocat et al**
**5, rue Paul Muller Simonis**
**F-67000 Strasbourg (FR)**

## Description

La présente invention a pour objet un réducteur de vitesse à roues de friction dans lequel l'effort d'application nécessaire à ces dernières est engendré par son propre fonctionnement.

Le secteur technique de l'invention est celui des dispositifs aptes à capter l'énergie mécanique rotative produite par une quelconque machine motrice, mais plus particulièrement lorsque le régime de rotation de ladite machine est très rapide, comme c'est le cas pour les turbines à vapeur et à gaz. En effet pour ces turbo-moteurs, compacité et légèreté ont pour contre-partie des vitesses de rotation très élevées, dépassant la limite d'emploi des moyens classiques de couplage et de réduction existants, notamment ceux à engrenages.

Un dispositif destiné à ce genre d'applications est déjà connu : il s'agit d'un coupleur-réducteur épicyloïdal à induction pour machines à très grande vitesse de rotation, décrit dans le brevet européen 0 161 194 dans lequel l'induction électromagnétique est principalement utilisée pour capter, au prix d'un glissement, l'énergie mécanique à très haut régime de rotation en partie primaire. Sur le secondaire, une autre action électro-magnétique transmet le couple capté, mais avec l'assistance d'un effet purement mécanique de roulement et de friction rotative appuyée par la force centrifuge s'exerçant sur ses satellite-inducteurs, lesquels sont relativement massifs.

La présente invention vise à apporter un perfectionnement à ce dispositif antérieur par une conception simple et de meilleur rendement en évitant l'électromagnétisme, car ce dernier implique non seulement une construction délicate et coûteuse, mais surtout des pertes d'énergie peu réductibles, par glissement, effet Joule, hystérésis et courants de Foucault, donc un important dégagement de chaleur qui impose un moyen de refroidissement.

Le dispositif réducteur objet de la présente invention met en oeuvre principalement des roues de friction fortement appliquées les unes contre les autres par les forces radiales générées dès la mise en rotation de son ensemble mobile.

L'emploi de roues de friction pour capter et transmettre un couple est connu, et de nombreux dispositifs réducteurs de vitesse à friction sont connus, notamment du brevet français 2 205 974 et de son certificat d'addition 2 211 088 qui portent sur un réducteur épicycloidal à friction qui comporte aussi des planétaires, mais dans lequel la force d'application des roues de friction vient du serrage de courroies élastiques et non des forces liées au fonctionnement de l'appareil du fait de sa rotation.

On connaît d'autre part un réducteur épicycloïdal à blocage centrifuge, décrit dans le brevet français 2 566 868, qui comporte des masselottes générant un effet centrifuge, mais cet effet lié à la rotation y a pour but d'obtenir un entraînement unidirectionnel en cas d'inversion de l'entrée de puissance entre le primaire et le secondaire, et non d'engendrer les efforts d'application nécessaires à des roues de friction.

Par rapport au procédé utilisé dans le dispositif selon le brevet européen 0 161 194 utilisant l'induction électromagnétique, la présente invention réside essentiellement dans le moyen de renverser le sens de la force centrifuge générée par la rotation orbitale des planétaires afin qu'elle s'exerce aussi, mais centripètement, sur l'arbre-menant à grande vitesse situé en position centrale et que finalement, toutes ces roues de friction primaires et secondaires se trouvent appliquées assez énergiquement les unes contre les autres pour pouvoir capter et transmettre efficacement le couple-moteur sans patinage, du moins jusqu'à une certaine limite, fixée entre autres facteurs par les matériaux employés et le dimensionnement choisi.

Comme ces roues de friction doivent être parfaitement circulaires, exemptes d'aspérités et indéformables sous l'effort d'application et le laminage continuellement subi en roulement, l'emploi d'acier dur traité et poli est d'abord retenu, sous forme par exemple de bagues issues de roulements industriels "NU" à rouleaux en acier spécial trempé-cémenté, parfaitement lisses. Mais il en résulte un très faible coefficient de frottement, de sorte qu'un effort d'application très élevé est nécessaire pour éviter le patinage.

Or cet effort doit demeurer bien inférieur à la résistance mécanique à la compression de l'acier choisi, sous peine d'altération rapide, du fait que la surface d'appui entre les roues est réduite à une ligne de contact métal sur métal. Aussi, pour accroître les performances et la tenue mécanique du dispositif, l'emploi d'autres matériaux présentant un meilleur coefficient de frottement est à rechercher pour réduire l'effort d'application, autorisant alors une moindre dureté ou encore un état de surface plus favorable à un renforcement de l'adhérence. C'est pourquoi la présente invention retient également l'emploi de tout autre métal que l'acier et même de matériaux non métalliques plus ou moins durs, homogènes ou composites, tels que matières plastiques, céramiques, élastomères avec fibres de carbone, ou autres.

Une autre particularité distingue la présente invention de celle précédemment décrite, il s'agit de la mise en oeuvre possible d'engrenages d'appoint. En effet, dans le système électro-magnétique à induction, la captation du couple-moteur est nécessairement asynchrone en raison du glissement relatif qu'exige ce système, entre roue menante (induit) et roue menée (inducteur) : il ne peut donc y avoir coexistence avec des engrenages donnant une transmission synchrone. Dans la présente invention, au contraire, tant qu'il n'y a pas de patinage, toutes les roues de friction peuvent fonctionner en synchronisme avec des engrenages, à l'instar d'un chemin de fer à crémaillère.

Or, jusqu'à la limite d'adhérence, les dentures des engrenages d'appoint doublant les roues de friction, ne supportent théoriquement aucune charge de couple, de sorte que leur seuil de déffaillance est reporté à de plus hauts régimes de rotation, même avec une lubrification précaire. Il s'ensuit que le dispositif selon la présente invention peut être mixte, c'est-à-dire avec des engrenages complétant les roues de friction afin d'éliminer tout risque de patinage accidentel ou fortuit, notamment lors du lancement à faible vitesse.

Convenant à toutes sortes de machines motrices plus ou moins rapides, turbines à vapeur ou à gaz notamment, le dispositif selon l'invention peut aussi être employé inversement comme multiplicateur de vitesse, à partir d'un moteur quelconque à bas régime pour entraîner des récepteurs à rotation rapide tels que des centrifugeuses, des compresseurs centrifuges, et autres.

Les avantages et les caractéristiques de la présente invention ressortiront plus clairement de la description qui suit et qui se rapporte au dessin annexe, lequel en représente un mode de réalisation non limitatif.

Dans le dessin annexé :
- la figure 1 représente une demi-coupe transversale du dispositif selon l'invention.
- la figure 2 représente une coupe longitudinale selon les deux plans définis par les axes XOX′ de la figure 1.
- la figure 3 représente une demi-épure géométrique transversale montrant la disposition de principe des différentes roues de friction et masses générant leurs forces d'application, avec représentation vectorielle de ces dernières.
- la figure 4 représente une demi-coupe transversale d'un deuxième mode de réalisation du dispositif selon l'invention.

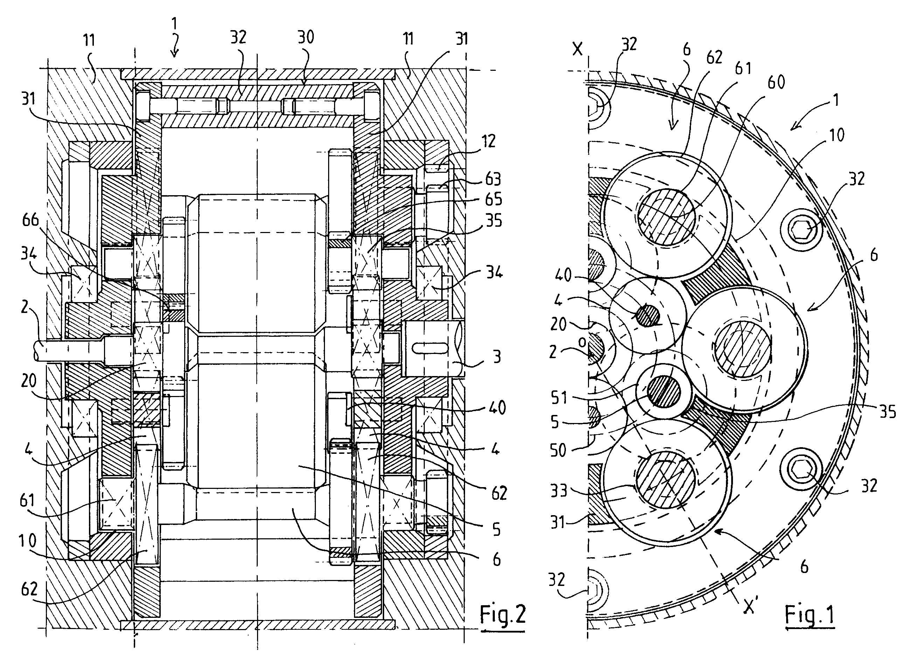

Si on se réfère aux figures 1, 2 et 3 on peut voir que la disposition générale du réducteur selon l'invention est celle d'un classique réducteur épicycloidal à engrenages avec deux orbites planétariales, dont chaque roue serait édentée et réduite à sa circonférence primitive, dite aussi de friction, toutes étant deux à deux en contact fortement appuyé par l'effet des moyens ci-après décrits.

La partie tournante active du réducteur selon l'invention est contenue dans un carter-enveloppe cylindrique 1 doté de deux pistes circulaires de roulement 10 de grand diamètre D5 chacune fixée concentriquement dans un de ses deux couvercles latéraux 11.

Cet ensemble tournant comporte:
- un rotor-menant central ou arbre primaire 2 entraîné à la vitesse N0 de la machine motrice par l'arbre d'entrée venant de l'extérieur, lui communiquant le couple-moteur de rotation rapide à capter et convertir. Ce rotor-menant central 2 est caractérisé par le diamètre primitif D0 des bagues deroulement garnissant ses deux moyeux porteurs 20.
- un ensemble concentrique dit cage porte-satellites 30 tournant sur deux paliers 34 à roulements à billes du carter-enveloppe 1, solidaire de l'arbre de sortie 3 débouchant à l'extérieur, du côté opposé au précédent arbre d'entrée 2, pour entraîner la machine réceptrice à la vitesse réduite de sortie N2. Cette cage 30 est constituée de deux joues latérales 31 solidement réunies et espacées par des entretoises 32.

Le rotor-menant central 2 est supporté en ses deux bouts garnis chacun d'une bague de roulement de diamètre D0 par trois galets fous 4 de diamètre D1, disposés à 120° l'un de l'autre, tournant librement sur trois axes 40 implantés dans chacune des deux joues latérales 31. Ainsi chaque extrémité ou moyeu 20 du rotor-menant central 2 repose sur ces galets fous 4 en trois points espacés de 120° qui constituent un palier roulant, sans aucune résistance passive nuisible, du fait qu'ainsi toute friction participe activement à la transmission du mouvement.

La cage porte-satellites 30 entraîne en rotation orbitale deux sortes de satellites ou planétaires qui constituent la base du mécanisme :
- trois satellites de masse M dits planétaires-masses 5 disposés à 120° l'un de l'autre, situés à 60° de part et d'autre des galets fous 4 et gravitant sur un cercle orbite 50 dont le diamètre DM ou le rayon RM est déterminé par la position de trois logements 35 ménagés dans chaque joue latérale 31, recevant leurs bouts d'arbres ou moyeux 51 de diamètre d2.
- six satellites périphériques dits planétaires extérieures 6 de moindre masse m, espacés de 60° et situés à 30° de part et d'autre des trois planétaires-masses 5, auxquels ils servent d'appui, gravitant sur un plus grand cercle-orbite 60, de diamètre Dm ou rayon Rm déterminé par la position de six logements ouverts 33 ménagés à la périphérie de chaque joue 31, recevant leurs bouts d'arbres ou moyeux 61 de diamètre d3.

Ces six planétaires extérieurs 6 comportent accolées à chacun de leurs moyeux 61 de diamètre d3, une roue 62 de plus grand diamètre D3. Chaque couple de deux roues 62 appartenant à deux planétaires extérieurs voisins constitue un des deux paliers supports tournants d'un planétaire-masse 5 en concordance sur les joues 31 avec un logement 35 qui n'a qu'un rôle positionneur, car le jeu radial prévu pour ce logement 35 est tel qu'en fonctionnement il ne supporte aucun effort donc n'est le siège d'aucune résistance passive. Par contre les deux forces tangentielles de friction rotative exercée sur les roues 62 par les moyeux 51 des planétaires-masses 5 participent à la synchronisation de leur rotation, donc à l'équi-transmission du couple de l'ensemble.

Ces planétaires extérieurs 6 reposent également par leurs deux bouts d'arbres ou moyeux 61 engagés dans les demi-paliers que constituent les logements ouverts 33, dans l'alésage des deux pistes de roulement fixes 10 de diamètre D5 ou rayon R5, incorporées au carter-enveloppe 1. Ils y roulent, fortement appuyés par la force centrifuge, leur espacement étant maintenu par les logements ouverts 33 des joues 31. La poussée tangentielle venant de ce roulement s'exerce sur un côté de ces demi-paliers lui communiquant le mouvement rotatif résultant, dans le sens de cette poussée, ainsi qu'à la cage 30 et à l'arbre de sortie 3 qui en est solidaire.

Les roues 62 de deux planétaires extérieurs 6 voisins mais non en contact avec le même planétaire masse 5, sont en contact avec un galet fou 4 intermédiaire qui le lie cinématiquement au rotor menant central 2.

Ainsi le rotor menant central 2 transmet par friction rotative son mouvement aux galets fous 4 qui le transmettent aux roues 62 donc aux moyeux 61 des satellites extérieurs 6 qui roulent dans les deux pistes circulaires de roulements 10 du carter enveloppe 1, entraînant ainsi la cage porte-satellite 30.

Entraînés en rotation orbitale à la vitesse N2, les planétaires-masses 5 tournent sur eux-même à la vitesse de rotation fixée par le rapport d2/D0, soit N0 si d2 = D0. C'est la gravitation orbitale de ces trois masses M qui génère la force centrifuge utilisée pour appliquer toutes les roues de friction de l'appareil les unes sur les autres.

Egalement en rotation orbitale à la vitesse de sortie N2, les planétaires extérieurs 6 tournent sur eux-mêmes à la vitesse de rotation N1. Bien que moins massifs que les trois planétaires-masses 5, la force centrifuge résultant de la gravitation de ces six masses m participe aussi aux effets mécaniques d'entraînement par roulement de friction.

Les bouts d'arbres ou moyeux de tous les planétaires ont des bagues de roulement semblables à celles de diamètre D0 équipant le rotor menant central 2, mais leurs diamètres, d2 pour le planétaire-masse 5 et d3 pour le planétaire extérieur 6 peuvent être soit égaux à D0 soit différents, le diamètre d3 intervenant dans le rapport de réduction final, mais non d2.

En fonctionnement, le jeu radial des galets fous 4 sur leur axes 40 est tel que ces derniers ne supportent aucun effort d'autant que ces galets fous 4 sont autocentrés par la symétrie des efforts radiaux qui s'y exercent. Ces axes 40 n'ont donc aussi qu'un rôle positionneur, en sorte que les seules résistances passives se situent aux deux roulements à billes constituant les paliers porteurs 34 de la cage 30 et aux six logements ouverts 33 de chaque joue latérale 31. Les galets fous 4 ainsi que les grandes roues 62 des planétaires extérieurs 6 constituent des roues intermédiaires entre les moyeux 20 de l'arbre menant central 2 et les moyeux 51 des planétaires-masses 5, de sorte que si le diamètre d2 de ces derniers est égal à D0, les planétaires-masses 5 tournent à la vitesse N0 de l'arbre menant central 2, laquelle peut être quelconque du fait qu'en dehors de leur rôle synchronisant des roues 62 ils ne transmettent le mouvement qu'ils reçoivent à aucune autre.

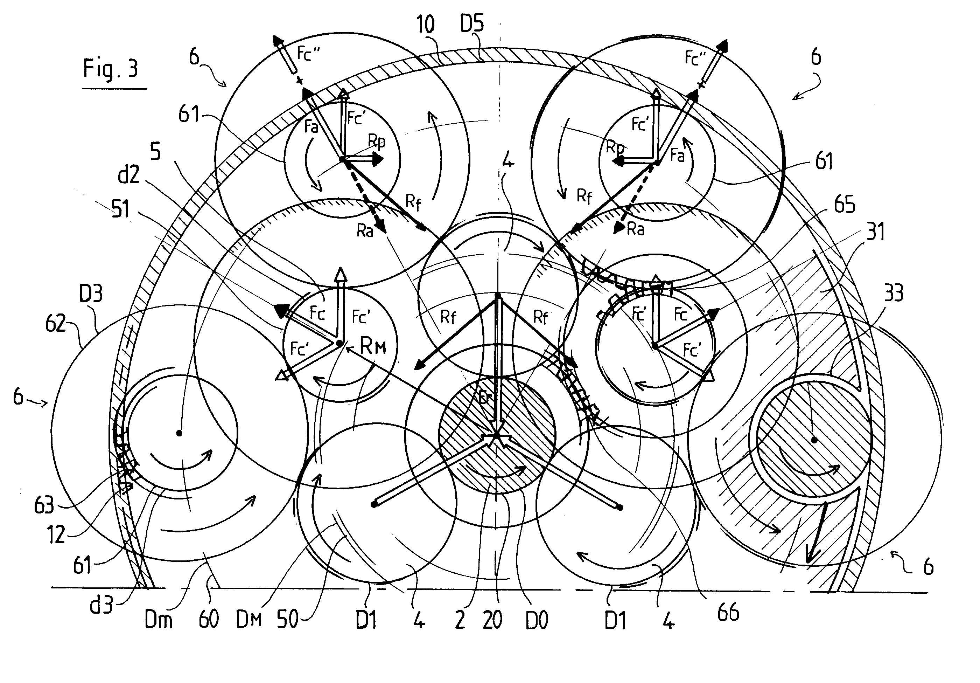

Le choix consistant à faire pincer en trois points à 120° le rotor menant central 2 par 2x3 galets fous 4 implique la mise en oeuvre de trois planétaires masses 5 et de six planétaires extérieurs 6, donc des divisions angulaires de 120°, 60° et 30° ainsi que le montre la figure 3. Le diamètre D0 du rotor menant central 2 étant choisi, la valeur adoptée pour celui D5 de la piste de roulement fixe 10 détermine la géométrie de l'ensemble et la plupart des diamètres.

Sur la figure 3, d2 = d3 = D0 mais ces diamètres peuvent être différents de D0 et aussi entre eux. Par exemple d3 plus petit que D0, ce qui implique pour conserver le même D1 de grossir D3 en conséquence ainsi que d2 si RM doit demeurer inchangé : car RM est tel que le centre des planétaires-masse 5 se trouve, tous jeux radiaux rattrapés, au centre du triangle équilatéral formé par l'axe de l'arbre menant central 2 et ceux des deux planétaires extérieurs 6 voisins. Ainsi est obtenu le plus grand diamètre possible pour la masse cylindrique M portée par chaque planétaire-masse 5 et dont dépend, avec RM, la valeur de la force centrifuge générée. Toutefois cette disposition n'est pas impérative, RM pouvant être plus faible dans la mesure où l'espace disponible en longueur est compatible avec l'obtention de la masse M nécessaire. Aussi, de ce facteur dépend la longueur de l'appareil compte tenu de la largeur à donner aux différentes roues de friction, de la recherche simultanée du moindre encombrement et d'une grande rigidité des arbres en rotation très rapide, imposant qu'ils soient aussi courts que possible.

Le choix des diamètres d2, d3, D3 et du rayon orbital RM détermine aussi le diamètre D1 des galets fous 4. Le jeu radial dans les logements 35 des bouts d'arbres 51 des planétaires-masses 5 autorise une réduction suffisante de RM pour permettre la mise en place de toutes les roues 62 des planétaires extérieurs 6. Toutefois en fonctionnement, leur appui énergique sur ces dernières se traduit par de légers déplacements angulaires et excentrations un peu différents, représenté sur la figure 3 par un doublement en traits interrompus des différentes circonférences.

Le fonctionnement du dispositif selon l'invention s'effectue de la manière suivante : la force centrifuge mise en oeuvre pour appliquer l'ensemble des roues de friction les unes contre les autres vient principalement de l'entraînement en rotation orbitale des trois planétaires-masses 5, chacune de ces trois forces radiales se décomposant en deux forces symétriques égales, obliques à 60°, tous jeux rattrapés. Tout en participant d'une manière prépondérante à l'application des moyeux 61 des planétaires extérieurs 6 sur leur piste de roulement 10 l'effort résultant de ces deux forces obliques se reporte selon une direction centripète sur l'arbre menant central 2.

Cependant les six planétaires extérieurs 6 également entraînés en rotation orbitale génèrent aussi une force centrifuge Fc'' proportionnelle à leur propre masse m et excentration Rm mais qui, étant radiale, ne se reporte pas vers l'arbre menant central 2. En outre et de construction, cette masse m n'est pas aussi importante que celle M des planétaires-masses 5, en sorte que malgré un rayon d'entraînement orbital beaucoup plus grand, ce second effet centrifuge est sensiblement plus faible. Néanmoins, il s'ajoute à l'effort d'application reçu des masses M par les moyeux 61 roulant dans l'alésage des deux pistes de roulement 10 fixes.

Chacun des planétaires-masses 5 étant en appui sur le palier support roulant que lui constituent les grandes roues 62 des deux planétaires extérieurs 6 voisins, la force centrifuge développée radialement se décompose en deux vecteurs égaux, obliques et symétriques à 60°, qui tendent à les écarter l'un de l'autre. Il s'ensuit que chacun tend à se rapprocher du planétaire extérieur 6 suivant, lui aussi soumis, avec son voisin, au même effet d'écartement par le deuxième planétaire-masse, et ainsi de suite pour les autres.

Or ce rapprochement deux à deux des planétaires extérieurs 6 est limité par la présence en appui, sur chacune des deux roues 62, du galet fou 4 intermédiaire qui se trouve ainsi poussé vers le centre par les deux forces convergentes égales dont la résultante est une force radiale centripète. Ainsi tout en participant d'une manière prépondérante à une application sur les pistes de roulement 10 des moyeux 61 porteurs des planétaires extérieurs 6 la force centrifuge générée par chacun des trois planétaires-masses 5 est transmise en direction du centre en trois vecteurs égaux décalés de 120° par les galets fous 4 s'appuyant sur les bagues 20 du rotor-menant central 2. Ce dernier se trouve alors pincé comme dans un mandrin à trois mors, de sorte que tout en étant supporté par les galets fous 4 comme dans un palier il leur transmet sa rotation à grande vitesse par effet de friction rotative.

Ainsi se trouve constitué un palier actif dispensant de tout autre et qui, du même coup, permet la captation du couple moteur sur cet arbre, moyen qui se substitue à l'effet d'induction électromagnétique utilisé antérieurement.

Secondairement, l'entraînement par friction rotative se fait par les six planétaires extérieurs 6 et aussi différemment du fait que la force d'application cumule ici deux effets centrifuges distincts : celui généré par les planétaires-masses 5 et celui propre à la masse m de chaque planétaire extérieur 6.

Les forces en jeu dans le dispositif selon l'invention sont les suivantes. Soit le vecteur Fc de direction radiale dont la grandeur correspond à la force centrifuge générée par chaque planétaire-masse 5 : il se décompose en deux vecteurs égaux et symétriques Fc', chacun dirigé vers le centre des planétaires extérieurs 6 situés de part et d'autre, formant avec le vecteur initial Fc un angle de 60°. Le parallélogramme des forces étant ainsi constitué de deux triangles équilatéraux, il s'ensuit que ces deux vecteurs Fc' sont égaux en grandeur à Fc.

Chacune des forces Fc' se transmet aux planétaires extérieurs 6 par appui sur leurs grandes roues 62, donc peut être translatée en leur centre, selon la direction définie par la ligne des centres passant par le point de contact sur la grande roue 62 du moyeu 51 correspondant du planétaire-masse 5. Les vecteurs Fc' s'y décomposent alors en deux forces : l'une Fa, radiale, appuye le moyeu 61 de ce planétaire extérieur 6 sur la piste de roulement 10 et s'exerce sur la piste de roulement 10, engendrant ainsi une réaction d'appui Ra égale et de direction opposée ; l'autre, Rp, exerce une poussée en direction du planétaire extérieur 6 voisin, perpendiculairement au vecteur Fc' précédemment translaté.

Les deux forces Ra et Rp appliquées au centre du planétaire extérieur 6 considéré sont composables en direction du point de contact de roulement entre la grande roue 62 et le galet fou 4, donnant une résultante Rf reportable au centre de ce dernier, y rejoignant une autre force Rf égale venant du planétaire extérieur 6 voisin selon le même schéma. De la composition de ces deux vecteurs Rf convergents résulte finalement l'effort radial Er s'exerçant sur le rotor-menant central 2. Il est aisé de vérifier que cet effort résultant est double de la force centrifuge initiale Fc : Er = Fc x 2.

Dans les dispositifs antérieurs utilisant l'électromagnétisme, les satellites inducteurs roulent directement dans l'alésage de la piste de roulement, mais ici, à dimensionnement général identique, les planétaires-masse 5 sont nécessairement sur une orbite circulaire réduite à peu près de moitié, ainsi que leur propre diamètre et par concéquent leur masse : la force centrifuge à laquelle ils sont soumis y est donc quatre fois moindre.

Or à la place de trois satellites inducteurs se trouvent maintenant six planétaires extérieurs 6 qui roulent sur la piste fixe 10, soumis au même entraînement orbital à la vitesse de sortie N2 mais avec une masse m moindre que M : la force centrifuge générée Fc'' est donc aussi réduite, mais une certaine compensation intervient du fait qu'elle s'exerce sur douze galets au lieu de six et que la force d'appui des galets porteurs 61 de chaque planétaire extérieur 6 est la somme Q = Fa + Fc''.

Pour ces roues de friction, il faut absolument éviter tout glissement relatif ou patinage, sous peine d'usure prématurée et rapidement prohibitive. Cette condition de non glissement dépend du coefficient de frottement découlant de la nature, de l'état des surfaces en contact de roulement, de leur lubrification et de la pression exercée par l'une sur l'autre. Ainsi la force d'application Er au niveau de l'arbre-menant central 2 entre ses bagues 20 serrées entre les galets fous 4 peut être très différente de celle, Q, appliquant les moyeux 61 des planétaires extérieurs 6 sur la piste fixe 10.

Des conditions de friction du premier dépend la capacité de capatation de couple moteur par le primaire de l'appareil, tandis que de celles du second dépend la capacité de transmission par son secondaire : or les forces d'application Er et Q résultent de l'importance des masses M et m, en sorte que l'obtention de l'équivalence entre la capacité de captation et celle de transmission conduit à optimiser le rapport M/m.

On peut aussi obtenir ce résultat par un plus faible rayon orbital RM, ce qui conduit à augmenter D3 et a pour conséquence de réduire non seulement Fc mais aussi Fc' avec une moindre diminution de M : cette solution est à retenir si l'on veut accroître le rapport de réduction dans lequel le diamètre D3 intervient.

Si la masse M doit être accrue alors que le précédent dimensionnement et le nouveau choix de RM ne le permettent plus en volume, ce planétaire peut être conçu avec un corps creux lesté de métal très dense, du plomb par exemple.

Des engrenages d'appoint pourront être adoptés dans le seul but d'éviter le patinage des moyeux 61 des planétaires extérieurs 6 lors de leur roulement dans les pistes de roulement 10, au moyen, sur chacun, d'un pignon 63 de diamètre primitif d3 attaquant un engrenage intérieur 12 de diamètre primitif D5. On peut aussi envisager la liaison mécanique entre les trois planétaires masse 5 et les six planétaires extérieurs 6 au moyen d'un train 65 de rapport d2/d3 avec un taux de travail aussi faible sinon nul. Enfin pour éviter tout glissement éventuel, notamment en cas de variation brusque du régime et compte tenu de l'inertie des planétaires-masses 5 une liaison est envisageable par un train 66 de rapport d2/D0 entre ces trois derniers et le rotor menant central 2, le taux de travail étant encore ici nul en régime permanent établi, en sorte que malgré l'importance des régimes de rotation ces dentures d'accompagnement doivent tenir, même avec une lubrification précaire.

La présente invention permet ainsi de décharger les dentures d'engrenages d'un réducteur opérant à des vitesses de rotation très élevées, par transfert de leur travail sur des roues de friction, afin qu'ils n'aient à jouer qu'un rôle de synchronisation et d'appoint éventuel. En outre, ce système esquive toute sujétion de construction de paliers fixes. De plus étant roulants ils sont ici actifs du fait que les résistances passives participent à la transmission du mouvement.

Il est à noter aussi que tous ces rotors et planétaires tournent en s'appuyant les uns sur les autres par des roues de friction dont le diamètre est exactement le diamètre primitif de leurs engrenages d'accompagnement, de sorte que le positionnement relatif de ces derniers est toujours parfait, alors qu'au contraire le jeu de graissage des paliers classiques se répercute sur le jeu d'engrènement, lequel s'en trouve plus ou moins affecté.

Le rapport de réduction s'établit de la manière suivante : la chaîne cinématique part de l'arbre-menant central 2 tournant à la grande vitesse N0 et aboutit, par l'intermédiaire de la cage 30, à l'arbre de sortie 3 qui tourne à la vitesse réduite N2. Elle passe successivement par les roues de friction caractérisées par leur diamètre, de D0 à D1, de D1 à D3 qui est solidaire de d3, de d3 à la cage 30 par la poussée tangentielle résultant du roulement de d3 sur D5 : n'interviennent donc dans l'expression du rapport de réduction que les diamètres D0, D3, d3 et D5, et non pas d2, ni D1.

La première réduction de vitesse s'opère entre les bagues 20 de l'arbre menant central 2 tournant à N0 et les grandes roues 62 des planétaires extérieurs 6, par l'intermédiaire des galets fous 4, faisant intervenir les diamètres D0 et D3 de sorte que la vitesse de rotation de ces derniers et de leur moyeux solidaires 61 est N1 = N0 x D0/D3 ou N0 = N1 x D3/D0.

La deuxième réduction de vitesse s'effectue entre les précédents moyeux 61 de diamètre d3 tournant à la vitesse N1 et la piste de roulement 10 sur laquelle ils roulent en entraînant dans ce mouvement la cage 30 à la vitesse N2. Pour un réducteur ordinaire on aurait une vitesse de sortie $N2 = N1 \times (d3/D5)$ de sorte que $N0/N2 = (D3/D0)/(d3/D5)$ soit $N1 = N0 \times (D0/D3)$ ou $N0 = N1 \times (D3/D0)$ et $N2 = N1 \times (d3/D5)$.

Mais s'agissant d'un système à planétaires, ce rapport est à majorer ou minorer de 1 selon que le sens de rotation de l'arbre-menant 2 et de l'arbre de sortie 3 sont concordants ou contraires, en sorte que finalement $N0/N2 = (D3 \times D5)/(D0 \times d3) \pm 1$.

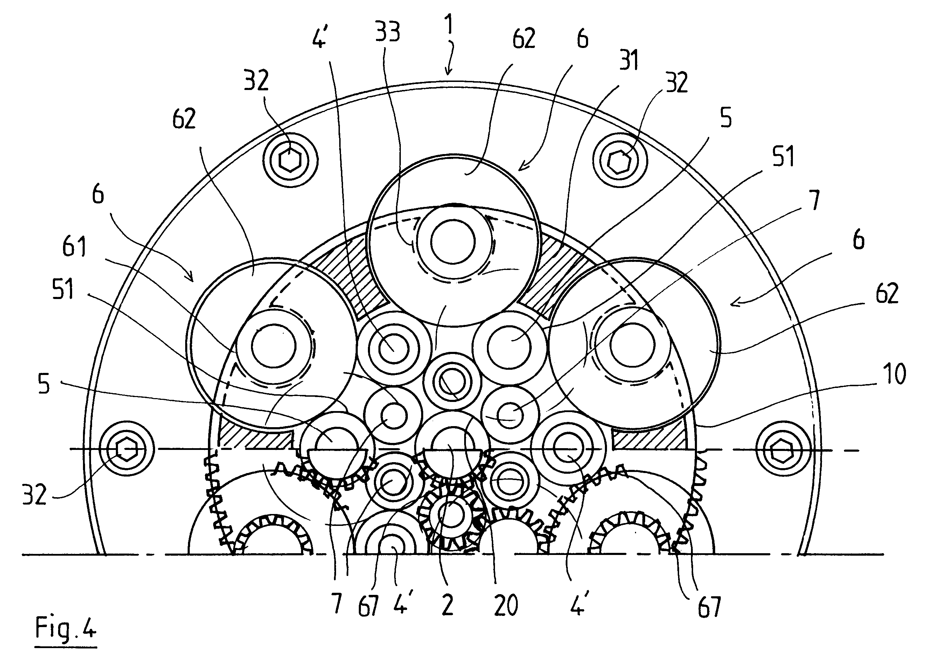

Si on se réfère maintenant à la figure 4 on peut voir sur cette figure un autre mode de réalisation du réducteur selon l'invention. Dans le premier mode de réalisation, en effet, bien que liés au rotor-menant par un couple d'engrenage, les planétaires-masses ne jouent aucun rôle dans la réduction de vitesse. Ils sont seulement assujettis à tourner sur eux-même en synchronisme avec les roues sur lesquelles ils s'appuient. Toutefois c'est à cause d'eux et des deux séries de trois galets fous que les sens de rotation du primaire et du secondaire se trouvent finalement inversés, et donc le rapport de réduction minoré de 1.

Dans le deuxième mode de réalisation, afin de retrouver des sens de rotation concordants et de bénéficier du meilleur rapport de réduction, le montage est modifié comme suit.

Les deux séries de trois galets fous 4 servant de palier au rotor-menant sont remplacés par deux séries de trois autres galets 4′ de beaucoup plus petit diamètre, celui des moyeux des planétaires-masses. Ces galets sont encore en contact roulant avec les grandes roues 62 des planétaires extérieurs 6 et constituent comme auparavant leur butée limitatrice d'écartement. Mais du fait de leur diamètre réduit et de la position plus excentrée de leur axe porteur, ils ne sont plus en contact roulant avec les moyeux 20 du rotor menant central 2, perdant ainsi leur ancien rôle de palier porteur, dévolu à deux séries de six galets supplémentaires 7.

Ces galets supplémentaires 7 sont des roues intermédiaires insérées dans l'espace annulaire dégagé autour du rotor menant central 2, portées avec jeu par des axes implantés dans chaque joue latérale 31 de la cage 30. Il s'ensuit que le nombre de galets porteurs du rotor-menant central passe de deux séries de trois à 120° à deux séries de six à 60°, soit six points de roulement appuyé au lieu de trois antérieurement.

Les contacts roulants entre ces deux séries de six galets 7 et les deux séries de trois galets 4′ plus excentrés se situent de chaque côté : pour un premier groupe de trois à 120°, entre les moyeux 20 du rotor-menant 2 et la série de trois galets fous 4′ poussés centripètement chacun par une paire de grandes roues 62 de deux planétaires extérieurs 6 qui s'y appuient ; pour le deuxième groupe des trois autres, aussi à 120° mais alternés avec les précédents, entre les moyeux 20 du rotor menant central 2 et les moyeux 51 des planétaires-masse 5, l'ensemble de ces galets 7 s'appuyant aussi sur les deux séries de galets 4′ poussés centripètement chacun par une paire de grandes roues 62 de deux planétaires extérieurs 6 consécutifs.

Ces appuis mutuels sont autorisés par le sens des rotations synchrones ainsi obtenues.

L'effort centripète résultant, reçu d'une paire de grandes roues 62 par le galet 4′ sur lequel elles s'appuient, ne s'applique donc plus directement sur le moyeu 20 correspondant du rotor menant central 2. Il s'exerce selon deux directions obliques et symétriques sur deux galets intermédiaires 7 consécutifs à 60°.

Or chacun de ces deux galets 7 s'appuie sous l'effet de ces poussées, d'une part sur un moyeu 20 du rotor-menant 2, d'autre part sur un moyeu 51 d'un planétaire-masse 5, de sorte que ces deux moyeux s'opposent à ce qu'ils s'écartent davantage l'un de l'autre.

L'ensemble étant ainsi statiquement équilibré, il en résulte que la même poussée, supportée par chacun de ces galets, est répercutée radialement sur chaque moyeu du rotor menant selon une direction centripète.

Finalement chaque moyeu du rotor menant est ainsi enserré en six points à 60° par une même force centripète issue de la force centrifuge générée par les trois planétaires-masses. Le résultat est le même que dans le premier mode de réalisation, mais le sens de rotation de l'arbre mené devenant celui du menant le rapport de réduction est plus intéressant, étant majoré de 2 à diamètres de roues égaux.

D'autre part, le doublement du nombre de points de contact roulant sur le rotor-menant est bénéfique, divisant par deux la pression unitaire d'appui, de sorte que les planétaires-masse peuvent être alourdis d'autant pour accroître la capacité de captation-transmission de l'arbre menant.

Par ailleurs, du fait de la présence d'une roue de friction intermédiaire entre le moyeu du rotor-menant et le moyeu du planétaire-masse, maintenue fortement appuyée dans le système de force ainsi organisé, le bénéfice du maintien rigoureux des jeux d'engrènement par appui constant entre roues ayant le diamètre primitif des pignons, s'étend au train, désormais triple, des engrenages d'accompagnement 67 liant ces rotors.

Dans le premier mode de réalisation, le cas du train double entre rotor-menant et chaque planétaire-masse est d'autant plus critique qu'il tourne très vite et que le pignon mené s'écarte nécessairement du menant situé au centre, à cause du rattrapage de tous les jeux de montage entre roues : d'où une excentration qui accroît inévitablement le jeu d'engrènement.

Enfin, les engrenages pouvant être tous regroupés du même côté, l'organisation de leur lubrification est plus aisée et l'encombrement en longueur s'en trouve sensiblement réduit.

La complication introduite étant plus apparente que réelle, ce deuxième mode de réalisation pourra être préféré pour ces avantages, notamment si un plus fort rapport de réduction est nécessaire.

## Revendications

1. Réducteur de vitesse à roues de friction pour machines tournantes à régime de rotation élevé, du type à double train épicycloïdal, utilisant, entre un rotor-menant central (2) et l'arbre de sortie (3) d'un rotor-mené, les effets mécaniques d'entraînement par friction rotative obtenus par le roulement de roues de friction fortement appliquées les unes contre les autres, caractérisé en ce que les forces d'application sont engendrées par la force centrifuge résultant de la rotation orbitale de planétaires-masses (5) de masse M disposés avec un jeu radial autour du rotor-menant (2), ladite force centrifuge appliquant lesdits planétaires-masses (5) contre des planétaires extérieurs (6), de moindre masse m, entraînés en rotation par des galets-fous (4) en appui sur les moyeux (20) de l'arbre-menant (2), lesdits planétaires extérieurs (6) roulant en appui sur deux pistes circulaires de roulement fixes (10) par leurs moyeux (61) abrités dans des logements (33) ménagés dans les joues latérales (31) d'une cage porte-planétaires (30) qui maintient lesdits planétaires extérieurs (6) dans les directions axiale et radiale et transmet le mouvement de rotation à l'arbre de sortie dont elle est solidaire (3), les planétaires-masses (5) roulant en appui, par leurs moyeux (51), sur les jantes de roues (62) accolées aux moyeux (61) des planétaires extérieurs (6) tandis que la force centrifuge générée par leur rotation orbitale tend à écarter les deux appuis situés sur deux roues (62) voisines, donc à éloigner et rapprocher deux à deux les planétaires extérieurs (6), ce déplacement desdits planétaires extérieurs (6) étant limité par la présence des galets-fous (4) sur lesquels les roues (62) butent en appui rotatif, cette disposition des éléments du réducteur de vitesse résultant en un ensemble de forces radiales centripètes qui enserrent le rotor-menant (2), permettant d'opérer la captation de l'énergie mécanique par friction rotative et de réaliser la réduction de vitesse selon le rapport théorique déterminé par les diamètres choisis pour les différentes roues de friction coopérant sans glissement.

2. Réducteur de vitesse selon la revendication 1, caractérisé en ce qu'il comporte à la place des galets fous (4) des galets-fous (4') de plus petit diamètre, et des galets intermédiaires (7) insérés entre les galets (4') et le rotor-menant central (2) et portés par des axes implantés dans chaque joue latérale (31) de la cage (30), la force centripète résultant s'exerçant selon deux directions obliques et symétriques sur deux galets intermédiaires (7) consécutifs, permettant d'obtenir des sens de rotation concordants pour le rotor-menant (2) et l'arbre de sortie (3) et, par là, d'augmenter le rapport final de réduction sans changement du diamètre des planétaires-masses (5) et des planétaires extérieurs (6).

3. Réducteur de vitesse selon la revendication 1 ou la revendication 2, caractérisé en ce que les planétaires-masses (5) sont constitués d'un corps creux lesté avec un métal très dense tel que le plomb.

4. Réducteur de vitesse selon l'une quelconque des revendications précédentes, caractérisé en ce que ses différentes roues de friction sont réalisées en des matériaux plus ou moins durs choisis parmi les métaux et les matériaux non-métalliques, homogènes ou composites.

5. Réducteur de vitesse selon l'une quelconque des revendications précédentes, caractérisé en ce que les roues de friction mises en oeuvre sont munies d'engrenages d'appoint (65, 66, 67) de diamètres égaux à leurs diamètres primitifs.

## Claims

1. A reduction gearing with friction rollers of the type with two planetary gear trains, for machines turning at high rotary speed using, through a central driving rotor and the output shaft (3) of a driven rotor, the rotational friction mechanical driving effects obtained by the rolling of friction rollers strongly applied to one another, characterised in that the application forces are generated by the centrifugal force resulting from the orbital rotation of planetary masses (5) of mass M disposed with a radial clearance around the driving rotor (2), the said centrifugal force applying the said planetary masses (5) against the external planetary gears (6) of a lesser mass m, driven in rotation by loose wheels (4) supported on hubs (20) of the driving shaft (2), the said exterior planetary gears (6) running with the support of two fixed circular runways (10) by their hubs (61) shielded in housings (33) provided in the lateral flanges (31) of a planetary gear mounting cage (30) which maintains the said exterior planetary gears (6) in the axial and radial directions and transmits the rotational movement to the output shalt of which it is a part, the planetary masses (5) running with support, by their hubs (51), on the rims of wheels (62) placed side by side with the hubs (61) of the exterior planetary gears (6) whilst the centrifugal force generated by the orbital rotation tends to swing aside the two supports situated on two neighbouring wheels (62) then moving away and bringing together two by two the exterior planetary gears (6), this displacement of the said exterior planetary gears (6) being limited by the presence of loose wheels (4) upon which the wheels (62) butt in rotational support, this arrangement of the elements of the reduction gearing resulting in an assembly of radial centripetal forces which grip the driving rotor (2) allowing the carrying out of the harnessing of the mechanical energy by rotational friction and to bring about the reduction of speed according to the theoretical relationship determined by the diameters chosen for the different friction wheels cooperating without sliding.

2. Reduction gearing according to claim 1 characterised in that it comprises in place of the loose wheels (4), loose wheels (4') of a smaller diameter and intermediary wheels (7) inserted between the wheels (4') and the central driving rotor (2) and carried by axles implanted in each lateral flange (31) of the cage (30), the resultant centripetal force acting along two oblique and symmetrical directions on two consecutive intermediary wheels (7), allowing the achievement of agreement of direction of rotation for the driving rotor (2) and the output shalt (3) and thereby to improve the final reduction relationship without changing the diameter of the planetary masses (5) and the exterior planetary gears (6).

3. Reduction gearing according to claim 1 or claim 2 characterised in that the planetary masses (5) are comprised of a hollow body, ballasted with a very dense metal such as lead.

4. Reduction gearing according to any one of the preceding claims characterised in that the differing friction rollers are produced from a material which is hard to a greater or lesser extent chosen among metals or non-metallic materials, homogenous or composites.

5. Reduction gearing according to any one of the preceding claim characterised in that the friction rollers used are provided with extra gearing (65, 66, 67) of diameters equal to their original diameters.

**Patentansprüche**

1. Untersetzungsgetriebe mit Reibräder für hochtourig drehende Maschinen der Bauart mit doppeltem Umlaufgetriebe unter Verwendung eines angetriebenen Rotors zwischen einem zentralen Antriebsrad (2) und der Ausgangswelle (3), bei dem die mechanischen Effekte des rotierenden Reibantriebs durch kräftiges gegenseitiges Abwälzen der Reibräder erhalten wird, **dadurch gekennzeichnet**, daß die Angriffskräfte durch die Fliehkräfte erzeugt werden, die aus der orbitalen Drehung von Planetenmassen (5) der Masse M resultieren, welche mit Radialspiel um das Antriebsrad (2) angeordnet sind, diese Zentrifugalkraft die Planetenmassen (5) gegen äußere Planeten (6) geringerer Masse m drückt, welche durch Schlepprollen (4) in Drehung versetzt werden, die sich auf der Nabe (20) des Antriebsrads (2) abstützen, diese äußeren Planeten (6) mit ihren Naben (61) auf zwei kreisförmigen feststehenden Abrollspuren (10) sich abstützend abrollen, diese Naben (61) von Aufnahmen (33) umfaßt sind, die in den Seitenwangen (31) eines die Planeten lagernden Käfigs (30) ausgespart sind, welcher die äußeren Planeten (6) in axialer und radialer Richtung hält und welcher die Drehbewegung zur Ausgangswelle (3), mit der er einstückig ist, überträgt, die Planetenmassen (5) mit ihren Naben (51) sich abstützend auf den Radkränzen von Rädern (62) abrollen, die an den Naben (61) der äußeren Planeten (6) angebracht sind, derart, daß die durch die orbitale Drehung erzeugte Zentrifugalkraft dazu tendiert, die beiden auf zwei benachbarten Rädern (62) angeordneten Abstützungen zu spreizen, um somit die äußeren Planeten (6) paarweise voneinander zu entfernen und anzunähern, diese Verschiebung der äußeren Planeten (6) begrenzt wird durch das Vorhandensein der Schlepprollen (4), an welchen sich drehend abstützend die Räder (62) anliegen, diese Anordnung der Bauteile des Untersetzungsgetriebes in einem Aufbau von radialen zentripedalen Kräften resultiert, welcher das Antriebsrad (2) umschließt, den Betrieb der Aufnahme der mechanischen Energie durch rotierende Reibung und die Realisierung der Untersetzung der Geschwindigkeit gemäß dem theoretischen Bezug, der bestimmt wird durch die gewählten Durchmesser für die verschiedenen, ohne Gleiten zusammenwirkenden Reibräder, ermöglicht.

2. Untersetzungsgetriebe nach Anspruch 1, **dadurch gekennzeichnet**, daß es anstelle der Schlepprollen (4) Schlepprollen (4') von kleinerem Durchmesser und zwischen den Rollen (4') und dem zentralen Antriebsrad (2) eingesetzte Zwischenrollen (7), welche durch in jede Seitenwange (31) des Käfigs (30) eingesetzte Achsen getragen werden, aufweist, die resultierende Zentripedalkraft in zwei quer und symmetrisch verlaufenden Richtungen auf zwei aufeinanderfolgende Zwischenrollen wirkt, den Erhalt des gleichen Drehsinns für das Antriebsrad (2) und die Ausgangswelle (3) ermöglicht und somit das Endverhältnis der Untersetzung ohne Änderung des Durchmessers der Planetenmassen (5) und der äußeren Planeten (6) erhöht.

3. Untersetzungsgetriebe nach Anspruch 1 oder Anspruch 2**, dadurch gekennzeichnet**, daß die Planetenmassen (5) durch Hohlkörper gebildet werden, welche mit einem sehr schweren Metall, wie beispielsweise Blei ausgefüllt sind.

4. Untersetzungsgetriebe nach einem der vorhergehenden Ansprüche, **dadurch gekennzeichnet**, daß die verschiedenen Reibräder aus einem mehr oder weniger harten Material bestehen, welches unter den Metallen oder den nichtmetallischen Materialien, homogen oder zusammengesetzt, bestehen.

5. Untersetzungsgetriebe nach einem der vorhergehenden Ansprüche, **dadurch gekennzeichnet**, daß die benutzten Reibräder mit zusätzlichen Verzahnungen (65, 66, 67) des gleichen Durchmessers wie ihre wirksamen Durchmesser versehen sind.

EP 0 453 383 B1

Fig.1

Fig.2

11

Fig. 3

EP 0 453 383 B1

Fig.4

EP 0 453 383 B1